# EUROPÄISCHE PATENTANMELDUNG

(11) **EP 4 403 534 A1**
(43) Veröffentlichungstag der Anmeldung: **24.07.2024**
(21) Anmeldenummer: 23152963.7
(22) Anmeldetag: 23.01.2023
(51) Int. Cl.: C04B 33/04, C04B 33/13, C04B 33/24, C03C 14/00, C03C 17/00, C04B 41/00, C04B 41/48, C04B 41/80, B65D 23/08, C04B 111/00

(54) **BEHÄLTER AUS EDELSTEINPORZELLAN ODER -GLAS**

(71) Anmelder: Steinbrückner, Karin, 92676 Speinshart (DE)
(72) Erfinder: Steinbrückner, Karin, 92676 Speinshart (DE)
(74) Vertreter: Lang, Christian

(57) **Zusammenfassung**

Die vorliegende Erfindung betrifft einen Behälter aus Glas oder Porzellan zur Aufnahme von Lebensmitteln oder Flüssigkeiten mit einem Aufnahmeraum (3) für Lebensmittel oder Flüssigkeiten sowie ein Verfahren zu dessen Herstellung, wobei der Behälter durch eine Begrenzung (2) definiert wird und der Behälter (1) mindestens einen Begrenzungsbereich aus Glas oder Porzellan aufweist, und wobei das Glas oder Porzellan im Begrenzungsbereich mindestens einen mineralischen Edelstein (4), vorzugsweise mehrere mineralische Edelsteine einer oder mehrerer Arten von Edelsteinen aufweist, wobei die Dimensionen des oder der Edelsteine in ihrer maximalen Erstreckung kleiner sind als die minimale oder durchschnittliche Dicke der Begrenzung (2) oder des Begrenzungsbereichs aus Glas oder Porzellan quer zum Aufnahmeraum.

## Beschreibung

### HINTERGRUND DER ERFINDUNG

### GEBIET DER ERFINDUNG

Die vorliegende Erfindung betrifft einen Behälter aus Glas oder Porzellan zur Aufnahme von Lebensmitteln oder Flüssigkeiten mit einem Aufnahmeraum für Lebensmittel oder Flüssigkeiten sowie ein Verfahren zur Herstellung eines entsprechenden Behälters, der zumindest teilweise aus Glas oder Porzellan hergestellt ist.

### STAND DER TECHNIK

Seit vielen Jahren ist die einzigartige Wirkung, die von Edelsteinen ausgeht, bekannt. So haben bereits die alten Griechen beispielsweise den Geschmack ihres Weines mit Amethyst bereichert. 'Amethyst' bedeutet in der Übersetzung aus dem Altgriechischen 'Der Unberauschbare'. Professionelle Sommeliers unserer heutigen Zeit haben diese Wirkung wiederentdeckt und mit Edelsteinphiolen hervorragende, geschmackliche Ergebnisse erzielt.

Edelsteine, die auch als Schmucksteine bezeichnet werden, sind üblicherweise dadurch gekennzeichnet, dass sie selten sind, eine gewisse Härte und Transparenz aufweisen. Bekannte Edelsteinarten sind beispielsweise Rubin, Saphir, Smaragd und Topas. Üblicherweise handelt es sich um seltene Mineralien.

Edelsteinphiolen werden üblicherweise aus Kristallglas hergestellt und umschließen in einem ballonförmigen Körper aus Glas entsprechende Edelsteine, wobei zusätzlich am ballonförmigen Körper aus Glas ein Stiel angebracht ist, mit dem die Phiole in einen Getränkebehälter oder ein Trinkglas gestellt werden kann, um die Wirkung der Edelsteine auf das im Behälter befindliche Getränk, wie Wasser, auszuüben. Allerdings ist die Anordnung der Edelsteinphiolen in entsprechenden Behältern umständlich und häufig behindern die Edelsteinphiolen auch den Gebrauch des Behälters oder Trinkglases.

Darüber hinaus sind Flaschen mit Edelsteinmodulen bekannt, wobei die Edelsteinmodule wiederum einen Glasbehälter zur Aufnahme der Edelsteine aufweisen. Bei den bekannten Flaschen mit Edelsteinmodulen können die Edelsteinmodule am Boden der Flasche angebracht werden, wobei das Edelsteinmodul einen stab - oder kugelförmigen Aufnahmeraum für die Edelsteine definiert, der sich in das Flascheninnere hineinwölbt. Obwohl auch damit die Wirkung der Edelsteine auf das in der Flasche befindliche Getränk oder eine entsprechende Flüssigkeit möglich ist, ist genauso wie bei der Edelsteinphiolen durch die Konzentration der Edelsteine auf einen engen Bereich die Wirkung begrenzt. Darüber hinaus ist bei den Edelsteinmodulen das Behältervolumen für die Flüssigkeit in der Flasche durch den Aufnahmeraum der Edelsteine verringert und die Gestaltung der entsprechenden Flaschen ist begrenzt.

### OFFENBARUNG DER ERFINDUNG

### AUFGABE DER ERFINDUNG

Es ist Aufgabe der vorliegenden Erfindung die Möglichkeiten, die eine Wechselwirkung von Edelsteinen mit Flüssigkeiten und Lebensmitteln, wie insbesondere Getränken, bieten, in einfacherer Weise zur Verfügung zu stellen als mit Edelsteinphiolen oder Flaschen mit Edelsteinmodulen. Dadurch soll die Nutzbarkeit und die Gestaltbarkeit entsprechender Behälter erweitert und verbessert werden. Gleichzeitig soll jedoch die Wirkung der Edelsteine auf die in den Behältern aufgenommene Flüssigkeit oder Lebensmittel zumindest beibehalten oder gesteigert werden.

### TECHNISCHE LÖSUNG

Diese Aufgabe wird gelöst durch einen Behälter aus Glas oder Porzellan mit den Merkmalen des Anspruchs 1 sowie mit einem Verfahren zur Herstellung eines entsprechenden Behälters mit den Merkmalen des Anspruchs 9. Vorteilhafte Ausgestaltungen sind Gegenstand der abhängigen Ansprüche.

Gemäß der Erfindung wird ein Behälter aus Glas oder Porzellan zur Aufnahme von Lebensmitteln oder Flüssigkeiten mit einem Aufnahmeraum für Lebensmittel oder Flüssigkeiten vorgeschlagen. Der Behälter wird durch eine Begrenzung, wie z.B. eine Begrenzungswand definiert, die einen Aufnahmeraum des Behälters für Lebensmittel oder Flüssigkeiten zumindest teilweise umschließt. Der Behälter umfasst mindestens einen Begrenzungsbereich aus Glas oder Porzellan. Das Glas oder Porzellan im Begrenzungsbereich weist mindestens einen mineralischen Edelstein, vorzugsweise mehrere mineralische Edelsteine einer oder mehrerer Arten von Edelsteinen auf, um eine Wechselwirkung der Edelsteine mit den im Aufnahmeraum des Behälters aufgenommenen Lebensmitteln oder Flüssigkeiten zu ermöglichen. Die Dimensionen des oder der Edelsteine sind dabei in ihrer maximalen Erstreckung kleiner als die minimale oder durchschnittliche Dicke der Begrenzung oder des Begrenzungsbereichs aus Glas oder Porzellan quer zum Aufnahmeraum, um insbesondere zu ermöglichen, dass der mindestens eine mineralische Edelstein im Glas oder Porzellan aufgenommen sein kann. Alternativ oder zusätzlich kann der mindestens eine Edelstein auch auf einer Oberfläche des Begrenzungsbereichs angeordnet sein. Insbesondere könnender oder die Edelsteine in Form eines Pulvers vorgesehen sein. Durch die Verwendung von pulverförmigen Edelsteinen ergeben sich vielfältige Gestaltungsmöglichkeiten für den Behälter, sodass die Nutzung verbessert werden kann, wobei gleichzeitig die Möglichkeit der Wechselwirkung von Edelsteinen und im Behälter aufgenommenen Lebensmitteln oder Flüssigkeiten beibehalten oder durch eine bessere flächenmäßige Verteilung sogar verbessert wird.

Der mindestens eine mineralische Edelstein kann im Glas oder Porzellan gelöst oder in einer Dispersion als disperse Phase im Dispersionsmedium Glas oder Porzellan aufgenommen sein.

Der mindestens eine mineralische Edelstein kann in einem Anteil von 1 bis 25 Vol.%, insbesondere 5 bis 10 Vol.% im Glas oder Porzellan enthalten ist.

Der mindestens eine mineralische Edelstein kann in einer Beschichtung, insbesondere in einem wasserbasierten Lack auf der Oberfläche des Begrenzungsbereichs angeordnet sein.

Der Behälter kann vollständig aus Glas oder Porzellan gebildet sein.

Der Behälter kann jeder beliebige Behälter sein, insbesondere als Trinkglas, Karaffe, Flasche, Teller, Schüssel oder Dosen ausgebildet sein.

Der mindestens eine mineralische Edelstein kann ein Achat, Malachit, Lapislazuli, Rubin, Smaragd, Aquamarin, Chrysokoll, Sugilith, Pyrit, Turmalin, Obsidian, Jaspis, Sarder, Chrysopras, Blauquarz, Amethyst, Rosenquarz, Bergkristall, Chalcedon, Sardonyx, Onyx, Karneol oder Chrysolith sein.

Die Wirkung eine jeden Edelsteins ist spezifisch und kann beispielsweise entsprechend der Sinneslehre Rudolf Steiners einem der 12 Sinne zugeordnet werden, wie Chrysopras dem Gleichgewichtssinn, Karneol dem Wärmesinn, Rosenquarz dem Ichsinn, Blauquarz dem Bewegungssinn, Chrysolith dem Sehsinn, Chalcedon dem Gedankensinn, Amethyst dem Lebenssinn, Jaspis, Topas dem Geschmackssinn und Geruchssinn, Sardonyx dem Sprachsinn, Sarder dem Tastsinn und Onyx dem Hörsinn. Entsprechend können einzelne oder mehrere Arten von Edelsteinen unterschiedliche Sinne ansprechen.

Gemäß einem weiteren Aspekt der Verfahren wird zur Herstellung eines erfindungsgemäßen Behälters zunächst ein Behälter, der zumindest teilweise aus Glas oder Porzellan hergestellt ist, bereitgestellt oder es wird zunächst eine keramische Masse mit Kaolin, Quarz und Feldspat oder ein Gemenge für eine Glasschmelze vorbereitet. Der bereitgestellte Behälter aus zumindest teilweise Glas oder Porzellan wird dann an zumindest einem Teil der Glas - oder Porzellanoberfläche mit mindestens einem mineralischen Edelstein versehen. Alternativ kann die keramische Masse oder das Gemenge für eine Glasschmelze oder eine entsprechende Glasschmelze mit mindestens einem mineralischer Edelstein in Form eines Pulvers versetzt werden, um daraus einen Behälter mit mindestens einem Edelstein herzustellen.

Der mindestens eine mineralische Edelstein kann in Form eines Pulvers in einer Beschichtung auf die Glas - oder Porzellanoberfläche aufgebracht werden, insbesondere einem wasserbasierten Lack zugesetzt und auf die Glas - oder Porzellanoberfläche aufgebracht werden.

Ferner kann der mindestens eine mineralische Edelstein als Pulver einer keramischen Masse mit Kaolin, Quarz und Feldspat zugesetzt und in dieser verteilt werden, wobei anschließend ein Rohling des Behälters aus dieser Masse geformt und gebrannt werden kann.

Weiterhin kann der mindestens eine mineralische Edelstein als Pulver einem Gemenge für eine Glasschmelze mit insbesondere Siliziumdioxid (SiO₂), Natriumoxid (Na₂O) und Calciumoxid (CaO) und / oder einer Glasschmelze, insbesondere einer Rauschmelze oder einer geläuterten Schmelze beigemischt werden, wobei anschließend aus der Glasschmelze der Behälter geformt werden kann.

Als Edelsteine können die bereits vorher erwähnten Edelsteine Verwendung finden.

### KURZBESCHREIBUNG DER FIGUREN

Die beigefügten Zeichnungen zeigen in rein schematischer Weise in
- Figur 1: einen Querschnitt durch eine erste Ausführungsform eines erfindungsgemäßen Behälters,
- Figur 2: einen Querschnitt durch eine zweite Ausführungsform eines erfindungsgemäßen Behälters und in
- Figur 3: einen Querschnitt durch eine dritte Ausführungsform eines erfindungsgemäßen Behälters.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele ersichtlich. Allerdings ist die Erfindung nicht auf diese Ausführungsbeispiele beschränkt.

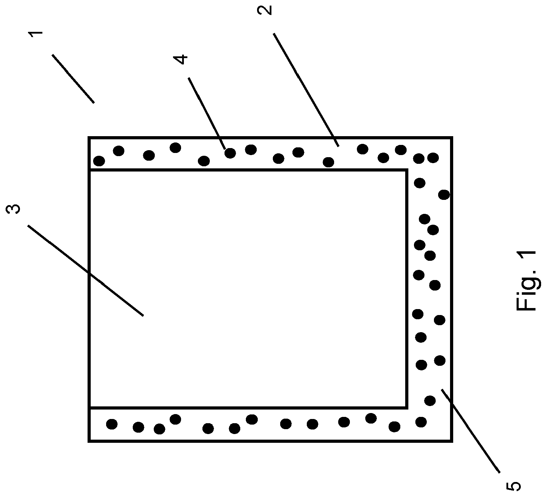

Die Figur 1 zeigt ein erstes Ausführungsbeispiel eines erfindungsgemäßen Behälters in Form eines Trinkglases 1, welches eine Begrenzung 2 in Form von einer umlaufenden Seitenwand und einem Boden 5 aufweist. Die Begrenzung 2 kann beispielsweise aus Glas oder Porzellan gefertigt sein. Die Begrenzung 2 umschließt einen Aufnahmeraum 3, der an der Oberseite offen ist, um eine Flüssigkeit, wie beispielsweise ein Getränk, aufzunehmen. Erfindungsgemäß weist die Begrenzung 2 feine Edelsteinpartikel 4 dispers verteilt in der Begrenzung 2 auf, also eingebettet in das Glas oder das Porzellan der Begrenzung 2. Entsprechend können die Edelsteinpartikel 4 mit einem im Aufnahmeraum 3 des Behälters 1 aufgenommenen Lebensmittel oder einer entsprechenden Flüssigkeit wechselwirken.

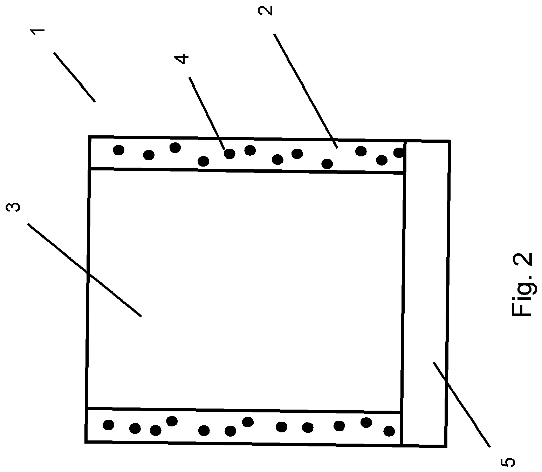

Die Figur 2 zeigt eine weitere Ausführungsform eines Trinkglases 1, bei welchem die Edelsteinpartikel 4 lediglich in den Seitenwänden der Begrenzung 2 aufgenommen sind, aber nicht im Boden 5, sodass die Edelsteinpartikel 4 lediglich in einem Teilbereich der Begrenzung 2 vorhanden sind. Entsprechend könnte der Boden 5 beispielsweise aus einem anderen Material gebildet sein, sodass auch nur ein Teil der Begrenzung 2 aus Glas oder Porzellan gefertigt ist.

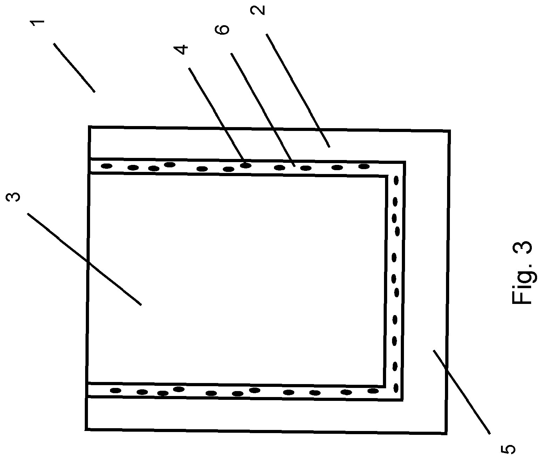

Die Figur 3 zeigt noch eine andere Ausführungsform eines erfindungsgemäßen Trinkglases 1, bei welchem die Edelsteinpartikel 4 in einer Beschichtung 6, wie beispielsweise einem Lack oder dergleichen, aufgenommen sind. Bei dem gezeigten Ausführungsbeispiel der Figur 3 ist die Beschichtung 6 bzw. der Lack an der Innenfläche des Trinkwassers 1 bzw. an der Oberfläche des Aufnahmeraums 3 angeordnet. Allerdings wäre es selbstverständlich auch möglich, die Beschichtung 6 an der Außenseite des Trinkglases 1 anzuordnen.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: Trinkglas
- 2: Begrenzung
- 3: Aufnahmeraum
- 4: Edelsteinpartikel
- 5: Boden
- 6: Beschichtung

## Patentansprüche

1. Behälter aus Glas oder Porzellan zur Aufnahme von Lebensmitteln oder Flüssigkeiten mit einem Aufnahmeraum (3) für Lebensmittel oder Flüssigkeiten, welcher durch eine Begrenzung (2) definiert wird, wobei der Behälter (1) mindestens einen Begrenzungsbereich aus Glas oder Porzellan aufweist,
**dadurch gekennzeichnet, dass**
das Glas oder Porzellan im Begrenzungsbereich mindestens einen mineralischen Edelstein (4), vorzugsweise mehrere mineralische Edelsteine einer oder mehrerer Arten von Edelsteinen aufweist, wobei die Dimensionen des oder der Edelsteine in ihrer maximalen Erstreckung kleiner sind als die minimale oder durchschnittliche Dicke der Begrenzung (2) oder des Begrenzungsbereichs aus Glas oder Porzellan quer zum Aufnahmeraum.

2. Behälter nach Anspruch 1,
**dadurch gekennzeichnet, dass**
der mindestens eine mineralische Edelstein (4) im Glas oder Porzellan aufgenommen ist oder auf einer Oberfläche des Begrenzungsbereichs angeordnet ist.

3. Behälter nach einem der vorhergehenden Ansprüche,
**dadurch gekennzeichnet, dass**
der mindestens eine mineralische Edelstein (4) im Glas oder Porzellan gelöst oder in einer Dispersion als disperse Phase im Dispersionsmedium Glas oder Porzellan aufgenommen ist.

4. Behälter nach einem der vorhergehenden Ansprüche,
**dadurch gekennzeichnet, dass**
der mindestens eine mineralische Edelstein (4) in einem Anteil von 1 bis 25 Vol.%, insbesondere 5 bis 10 Vol.% im Glas oder Porzellan enthalten ist.

5. Behälter nach einem der Ansprüche 1 oder 2,
**dadurch gekennzeichnet, dass**
der mindestens eine mineralische Edelstein (4) in einer Beschichtung (6), insbesondere in einem wasserbasierten Lack auf der Oberfläche des Begrenzungsbereichs angeordnet ist.

6. Behälter nach einem der vorhergehenden Ansprüche,
**dadurch gekennzeichnet, dass**
der Behälter (1) vollständig aus Glas oder Porzellan gebildet sind.

7. Behälter nach einem der vorhergehenden Ansprüche,
**dadurch gekennzeichnet, dass**
der Behälter (1) ausgewählt ist aus der Gruppe, die Trinkgläser, Karaffen, Flaschen, Teller, Schüsseln und Dosen umfasst.

8. Behälter nach einem der vorhergehenden Ansprüche,
**dadurch gekennzeichnet, dass**
der mindestens eine mineralische Edelstein (4) aus der Gruppe ausgewählt ist, die Achat, Malachit, Lapislazuli, Rubin, Smaragd, Aquamarin, Chrysokoll, Sugilith, Pyrit, Turmalin, Obsidian, Jaspis, Sarder, Chrysopras, Blauquarz, Amethyst, Rosenquarz, Bergkristall, Chalcedon, Sardonyx, Onyx, Karneol und Chrysolith umfasst.

9. Verfahren zur Herstellung eines Behälters (1), insbesondere eines Behälters nach einem der vorhergehenden Ansprüche, wobei zunächst ein Behälter (1), der zumindest teilweise aus Glas oder Porzellan hergestellt ist, bereitgestellt wird oder wobei zunächst eine keramische Masse mit Kaolin, Quarz und Feldspat oder ein Gemenge für eine Glasschmelze bereitgestellt werden,
**dadurch gekennzeichnet, dass**
der bereitgestellte Behälter (1) aus zumindest teilweise Glas oder Porzellan an zumindest einem Teil der Glas - oder Porzellanoberfläche mit mindestens einem mineralischen Edelstein (4) versehen wird
oder
dass der keramischen Masse oder dem Gemenge für eine Glasschmelze oder der Glasschmelze mindestens ein mineralischer Edelstein in Form eines Pulvers zugesetzt wird.

10. Verfahren nach Anspruch 9,
**dadurch gekennzeichnet, dass**
der mindestens eine mineralische Edelstein (4) in Form eines Pulvers in einer Beschichtung auf die Glas - oder Porzellanoberfläche aufgebracht wird, insbesondere einem wasserbasierten Lack zugesetzt und auf die Glas - oder Porzellanoberfläche aufgebracht wird.

11. Verfahren nach Anspruch 9,
**dadurch gekennzeichnet, dass**
der mindestens eine mineralische Edelstein (4) als Pulver einer keramischen Masse mit Kaolin, Quarz und Feldspat zugesetzt und in dieser verteilt wird, wobei anschließend ein Rohling des Behälters geformt und gebrannt wird.

12. Verfahren nach Anspruch 9,
**dadurch gekennzeichnet, dass**
der mindestens eine mineralische Edelstein (4) als Pulver einem Gemenge für eine Glasschmelze mit insbesondere Siliziumdioxid (SiO₂), Natriumoxid (Na₂O) und Calciumoxid (CaO) und / oder der Glasschmelze, insbesondere der Rauschmelze oder der geläuterten Schmelze beigemischt wird, wobei anschließend aus der Glasschmelze der Behälter (1) geformt wird.
